# EUROPEAN PATENT APPLICATION

(11) **EP 0 533 083 A2**
(43) Date of publication of application: **24.03.1993**
(21) Application number: 92115675.8
(22) Date of filing: 14.09.1992
(51) Int. Cl.: B23Q 16/00

(54) **Device for positioning plate-like elements on work surfaces**

(30) Priority: 19.09.1991 IT MI912472
(71) Applicant: Z. BAVELLONI S.p.A., I-22070 Bregnano (Como) (IT)
(72) Inventor: Bavelloni, Franco, I-22070 Appiano Gentile (Como) (IT)
(74) Representative: Modiano, Guido, Dr.-Ing.

(57) **Abstract**

The device for positioning a plate-like element on work surfaces includes a pin (2) connected to a pivoting arm (3) which is rotatable by an actuation shaft (6) having keyed thereto a gear (10) which meshes with a rack portion of a stem (16) of a piston (17), in which the pin in its inactive position is arranged to the side of the body (11) of a plate sucker element (1).

## Description

The present invention relates to a device for positioning plate-like elements on work surfaces.

As is known, in all those fields in which it is necessary to machine the edge of plate-like elements on automatic machines, for example numeric control machines, it is important that the plate-like element being machined is correctly and invariably positioned on the work surface.

Considering by way of example machines for machining the edge of glass plates, positioning devices are currently provided which are constituted by pneumatically or hydraulically actuated pistons each having a stem which protrudes above the plane of arrangement of the glass plate being machined, thereby in order to create a series of abutments which allow only one way of placing the glass plate on a work surface, which is rested and retained thereon for example by sucker means.

This type of solution has a series of problems which make the machining step troublesome and in some cases cause damage to said plate.

In particular, the pistons create a certain vertical bulk, so that they protrude with respect to the work surface and do not allow the use of tools constituted, for example, by three grinding wheels arranged axially side by side, i.e. the roughing, finishing and polishing grinding wheels, which perform the successive passes, since axial translatory motion of the tool is not possible due to interference with the pistons; consequently, it is necessary to use single-machining grinding wheels which must in each instance be replaced for the different machining passes.

Another typical problem of the machining of glass plates is constituted by the fact that the stems, or in any case the terminal portion which makes contact with the glass, are generally made of plastic material or rubber which can be scratched by the edge of the plate, which in some cases is sharp, after the initial step of cutting said plate.

Accordingly, the plate often scratches the plastic or rubber terminal part during the positioning of the plate against the abutments, so that during the step of retraction of the stem, which occurs with a translatory motion which is perpendicular to the plane of arrangement of said plate, the edge gets chipped, so that the entire plate must be discarded.

The principal aim of the present invention is indeed to solve the above described problems by providing a device for positioning plate-like elements on work surfaces which allows to avoid creating bulks below the plate, so that it is possible to use tools having a certain axial extension.

Within the scope of the above aim, a particular object of the invention is to provide a positioning device which, when it is removed from the positioned plate, does not produce scraping with respect to the edge, thus avoiding the possibility of damage or chipping of the edge.

Another object of the present invention is to provide a positioning device which has very small dimensions and which can be actuated very rapidly and easily.

A further object of the present invention is to provide a device for positioning plate-like elements on work surfaces which can be easily obtained starting from commonly commercially available elements and materials and which is furthermore competitive from a merely economical point of view.

This aim, these objects and others which will become apparent hereinafter are achieved by a device for positioning plate-like elements on work surfaces, according to the invention, including an abutment pin which is arranged to the side of an element for retaining a plate-like element, said abutment pin being arrangeable in a working position, wherein it protrudes from the plane of arrangement of said plate-like element, and in an inactive position, wherein it arranges itself below said plane of arrangement, and means for actuating said pin which are suitable to create, at least during the initial step of the transfer of said pin from said working position to said inactive position, a translatory component in said plane of arrangement along a direction which is substantially perpendicular to the peripheral extension of the plate-like element.

Further characteristics and advantages will become apparent from the description of a preferred but not exclusive embodiment of a device for positioning plate-like elements on work surfaces, illustrated only by way of non-limitative example in the accompanying drawings, wherein:
figure 1 is a schematic view of the device for positioning plate-like elements, according to the invention, arranged on a surface for supporting plate-like elements such as glass plates;
figure 2 is a view of the device connected to a sucker which constitutes the element for retaining the plate-like element in working position;
figure 3 is a view of the device in inactive position;
figure 4 is a schematic view of the supporting arm of the abutment pin;
figure 5 is a partially sectional top view of the device in working position;
figure 6 is a partially sectional top view of the device in inactive position.

With reference to the above figures, the device for positioning plate-like elements on work surfaces, according to the invention, is arranged to the side of an element for retaining a plate-like element which, in the specific case, is constituted by a conventional vacuum sucker 1 which is structured for supporting and retaining glass plates.

The device comprises a pin 2 which protrudes substantially at right angles from an arm 3 which is connected to a block 4 which has a through hole 5 for engaging an actuation shaft 6 which is arranged perpendicular to the axis of the pin.

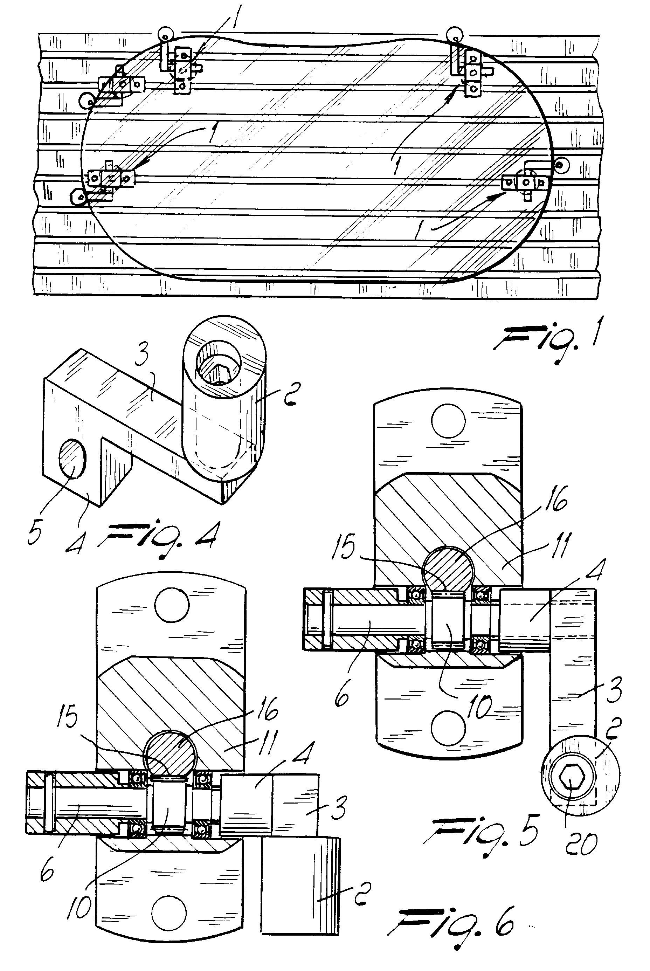

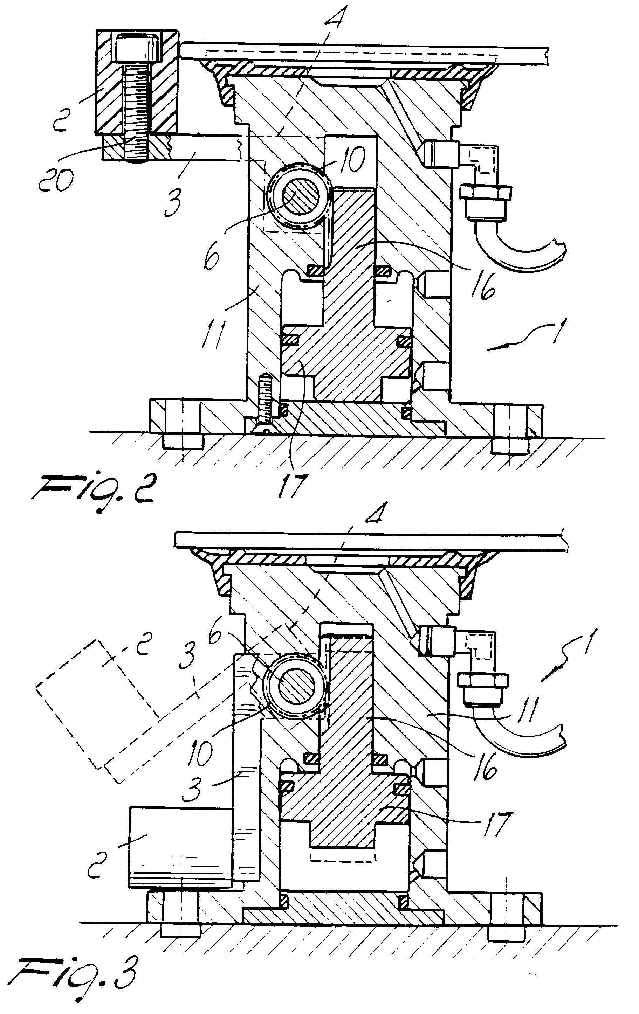

Said pin 2 can be positioned in a working position, schematically shown in figures 2 and 5, wherein it protrudes from the plane of arrangement of the plate and defines the abutment for the correct positioning of said plate.

Said pin can furthermore be positioned in an inactive position wherein it is removed and spaced from the work surface (figures 3 and 6).

An important peculiarity of the invention is constituted by the fact that in its inactive position the pin does not occupy space in an axial direction with respect to the work surface, so that it is possible to use tools having a significant axial extension.

Another important peculiarity of the invention is constituted by the fact that actuation means are provided in order to transfer the pin 2 from the working position to the inactive position and/or vice versa and that said actuation means do not cause relative scraping between the pin and the edge of the plate, so that the possibility of damage to the edge is avoided.

In order to achieve this, at least during the initial step of the transfer of the pin from the working position to the inactive position a translatory component is obtained in the plane of arrangement of the plate 3 along a direction which is substantially perpendicular to the peripheral extension of the plate, i.e., in practice, spacing between the pin and the plate is produced without mutual scraping.

This movement is achieved by means of a rotation of the shaft 6, which is perpendicular, as previously mentioned, to the axial extension of the pin.

This rotation is actuated by a gear 10 which is keyed on the shaft 6, which is rotatably supported by the body 11 of the sucker; said gear 10 engages a rack-like portion 15 defined on the stem 16 of a piston 17 which can move inside the body of the sucker, in order to obtain the stroke which is required to transfer the abutment pin from the working position to the inactive position and/or vice versa.

Since the pin 2 is connected to the shaft 6 with a substantially right-angled connection, in its inactive position the pin 2 is arranged to the side of the sucker body, without thus occupying space in an axial direction.

Furthermore, in order to precisely position the abutment pin so as to adapt to the different possible configurations of the plate-like elements, the abutment pin 2 is provided with a pivot 20 for coupling to the arm 3 which is arranged eccentrically with respect to the axial extension of the pin, so that it is possible to adapt the correct position of the pin without having to replace it with others having different sizes in all those cases in which precise positioning is not achieved simply by using the fixing guides which are normally provided on work surfaces.

From what has been described above it can thus be seen that the invention achieves the intended aim and objects and in particular the fact is stressed that a device is provided wherein the abutment pin, in inactive position, does not create appreciable space occupation in an axial direction, allowing to use tools having a significant axial extension, such as for example, in the case of glass plate machining, tools on which the roughing, finishing and polishing grinding wheels are axially arranged side by side.

Furthermore, since the movement for spacing the pin from the plate occurs, at least in the initial step, with separation along the direction which is perpendicular to the extension of said plate, no scraping, with the possibility of damage to the edge of the plate, is produced.

The invention thus conceived is susceptible to numerous modifications and variations, all of which are within the scope of the inventive concept.

All the details may furthermore be replaced with other technically equivalent elements.

In practice, the materials employed, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Device for positioning plate-like elements on work surfaces, comprising an abutment pin (2) which is arranged to the side of an element (1) for retaining a plate-like element, said abutment pin being arrangeable in a working position, wherein it protrudes from the plane of arrangement of said plate-like element, and in an inactive position, wherein it arranges itself below said plane of arrangement, the device being characterized in that it comprises means (3-6, 10, 15-17) for actuating said pin which are suitable to create, at least during the initial step of the transfer of said pin from said working position to said inactive position, a translatory component in said plane of arrangement along a direction which is substantially perpendicular to the peripheral extension of the plate-like element.

2. Device according to claim 1, characterized in that said pin protrudes substantially from an arm (3) which is connected to a block (4) which can engage an actuation shaft (6) which extends substantially perpendicular to said pin.

3. Device according to the preceding claims, characterized in that it comprises means (10, 15-17) for rotating said shaft in order to move said pin from said working position to said inactive position and/or vice versa.

4. Device according to one or more of the preceding claims, characterized in that said means for rotating said shaft comprises a gearwheel (10) which is keyed on said shaft (6) which is rotatably supported by said retention element (1), said gearwheel meshing with a rack-like portion (15) of a stem (16) which can move inside said retention body.

5. Device according to one or more of the preceding claims, characterized in that said stem (16) is connected to a piston (17) which can move inside said retention body (11) constituted by a sucker-like body for retaining said plate-like element.

6. Device according to one or more of the preceding claims, characterized in that said pin (2) is arranged to the side of the base of said retention body (11) in its inactive position.

7. Device according to one or more of the preceding claims, characterized in that said pin (2) is eccentrically supported on a pivot (20) for coupling to said arm (3) in order to adjust the position of said pin with respect to the plate-like element.
